# EUROPEAN PATENT SPECIFICATION

(11) **EP 0 494 801 B1**
(45) Date of publication and mention of the grant of the patent: **19.07.1995**
(21) Application number: 92300269.5
(22) Date of filing: 13.01.1992
(51) Int. Cl.: F02F 11/00, F16J 15/08

(54) **Internal combustion engine and metallic gasket for use therein**
Brennkraftmaschine und metallische Abdichtung zur Anwendung in solcher Maschine
Moteur à combustion interne et plaque d'étanchéité métallique pour utilisation dans ce moteur

(30) Priority: 11.01.1991 JP 13866/91; 23.05.1991 JP 147781/91
(43) Date of publication of application: 15.07.1992
(73) Proprietor: NIHON METAL GASKET CO. LTD, Kumagaya-shi, Saitama 360 (JP)
(72) Inventor: Ueta, Kosaku, c/o Nihon Metal Gasket Co. Ltd., Kumagaya-shi, Saitama 360 (JP)
(74) Representative: Deans, Michael John Percy

(56) References cited:
- US-A- 3 091 472
- US-A- 4 739 999
- PATENT ABSTRACTS OF JAPAN vol. 8, no. 16 (M-270)(1453) 24 January 1984 & JP-A-58 178 055 (KANESAKA) 18 October 1983

## Description

The present invention relates to internal combustion engines and more particularly to metallic gaskets designed to be interposed between the joining surfaces of a cylinder head and a cylinder block which form part of such an internal combustion engine, thereby preventing leakages of combustion gas, cooling water, lubricating oil, etc.

Gaskets for this purpose are well known in the art. Of particular importance is the seal around the combustion chamber. Failure to provide sufficient sealing to the combustion chamber would cause a leakage of the combustion gas from within, resulting in a pressure drop.

It has previously been proposed to provide an array of beads in a resilient base plate of such a metallic gasket, the beads circum-extending about the combustion chamber opening. As the gasket is clamped in place by means of bolts, the beads produce repulsive forces resulting in a sealing function around the peripheral edge of the combustion chamber bore.

JP-A-58178055 discloses a metal gasket having two plates each equipped with beads producing a high sealing performance.

To prevent too great pressure being applied to the beads and resulting in fatigue and in a consequent breakdown in the sealing function, it has been suggested, for example, to mount one or more stops on flat segments of the gasket, thereby limiting the extent by which the beads may be compressed. Various proposals have been made as to where such stops should be mounted on the gasket and what form they should take. For example, JP-A-60-292893 suggests the insertion of an auxiliary grommet plate between two base plates of the gasket having beads thereon, bends of the grommet plate serving as stops. The aforementioned technique envisages the location of stops at flat segments of the gasket on both sides of beads located intermediate the cylinder bores of two adjacent combustion chambers of the cylinder block.

However, in recent years requirements for higher performance and for weight saving engines of smaller size and larger displacement have led to the engines being designed to have only a limited space between the bores of adjacent cylinders. As a result, stops cannot readily be mounted on both sides of the beads. In addition, the pressure applied around the cylinder bore becomes so lacking in uniformity that there is a resultant considerable difficulty in keeping the circularity of the bores intact.

An extreme decrease in the width of a stop is tantamount to producing a local increase in pressure which may result in a dent on the surface of the cylinder block or cylinder head. In addition, stops of extremely limited width are difficult to hold in place.

The present invention has resulted from our work in seeking to provide a metallic gasket which can be used in an internal combustion engine in a manner which ameliorates or overcomes the aforementioned difficulties.

In accordance with the present invention, we provide in one aspect thereof, a metallic gasket for location between the cylinder head and cylinder block of an internal combustion engine, the gasket comprising a base plate formed of resilient metal and provided with an array of beads adapted for sealing at least around the peripheral edge of an opening in the gasket corresponding to a combustion chamber of the cylinder block, and said base plate comprising two generally similar plates mounted back to back; the gasket being characterised in that the beads on one said plate differ in width from the corresponding beads on the other plate and the height of any said bead is 10% or less of the width of the said bead, and in that the plates are fixed together at flat segments thereof located radially closer to the centre of said opening than to a said bead extending circumferentially of said opening.

In a preferred embodiment, the plates are fixed together at flat segments thereof located at positions closer to the edge of said opening than to the centre of the width of a bead extending circumferentially of said opening. The invention also extends to an internal combustion engine, comprising: a cylinder block defining at least one combustion chamber, a corresponding cylinder head, and a metallic gasket as defined in either of the two preceding paragraphs, located in sealing relation between the cylinder block and cylinder head and providing a seal between the cylinder block and cylinder head at least around the peripheral edge of the opening of the gasket corresponding to the said combustion chamber.

The invention is hereinafter more particular described by way of example only with reference to the accompanying drawings in which:-
Fig. 1 shows schematic sectional views through an embodiment of gasket constructed in accordance with the present invention;
Fig. 1(a) being a section taken along the line A-A' in Fig. 2 infra; and
Fig. 1(b) being a section taken along the line B-B' in Fig. 2 infra;
Fig. 2 is a generally schematic plan view of the embodiment of gasket constructed in accordance with the present invention which is shown in partial enlarged section in Fig. 1;
Fig. 3 is a schematic sectional view corresponding to Fig. 1(b) for an alternative embodiment of gasket also constructed in accordance with the present invention;
Fig. 4 is a generally schematic sectional view corresponding to Fig. 1(a) of another alternative embodiment of gasket also constructed in accordance with the present invention;
Fig. 5 is a generally schematic sectional view of another alternative embodiment of gasket constructed in accordance with the present invention, the sectional view being take effectively along the line B-B' of Fig. 2 for such gasket; and
Fig. 6 is a generally schematic sectional view through yet another alternative embodiment of gasket also constructed in accordance with the present invention, the sectional view being taken effectively along the line C-C' in Fig. 2 for such gasket.

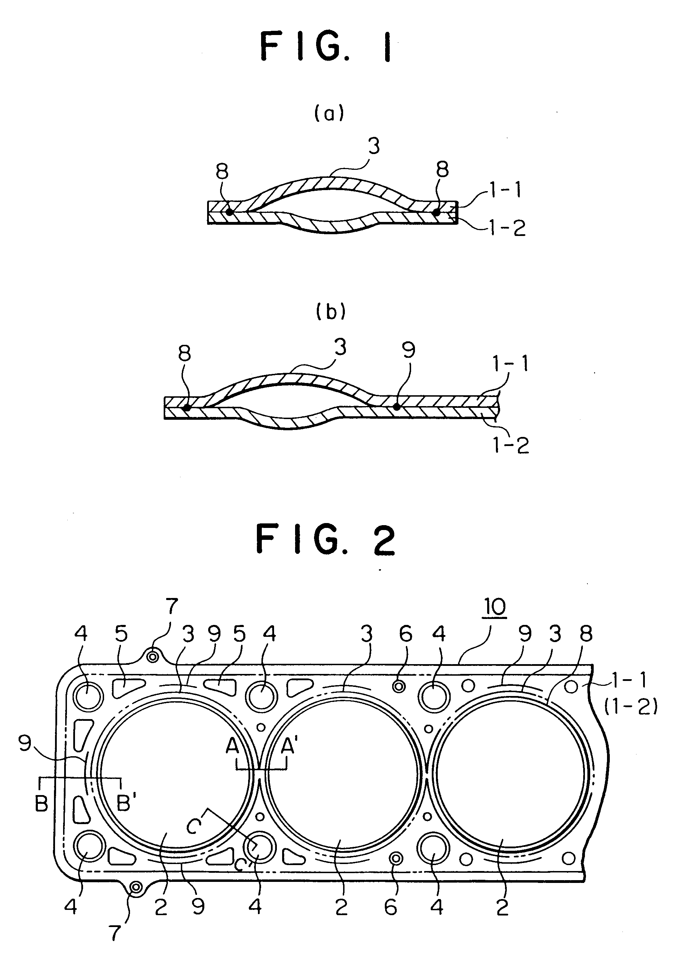

Referring first to the embodiment of Figs. 1 and 2, a metallic gasket body, generally indicated 10, includes two base plates 1-1 and 1-2, each made of resilient material, and has openings 2 located in association with combustion chamber bores of the cylinder block with which the gasket is to be used. The openings 2 are provided at their edge with a bead 3. Bolt holes 4 allow a bolt or screw to be inserted to fix the metallic gasket in place when it is built in to an engine. A hole 5 allows cooling water to circulate. An oil hole 6 is provided for oil. The two plates are laminated to make an integral whole and fixed at 7. Reference numerals 8 and 9 represent junction locations.

Referring now to Fig. 1(a), the base plates 1-1 and 1-2 will be referred to as the first and second plates, respectively. The two plates in the region of their beads 3 are designed to have different spring constants. Thus, the first plate 1-1 has a spring constant effectively decreased by increasing the width of its bead, while the second plate 1-2 has a spring constant effectively increased by decreasing the width of its bead.

More specifically, the bead width on the second plate 1-2 is limited to 75% or less of that of the first plate 1-1 so as to increase its spring constant. Reference numerals 8 represent a joint position of the first and second plates, which is radially closer to the centre of the opening than the beads. Joint position 8 is also closer to the edge of the opening than to the centre of the width of the adjacent bead. Joint position 8 extends around the circumference of the opening. Similarly, reference numeral 9 indicates a further joint position. As can be seen from Fig. 2, the joint positions 9 are of limited extent circumferentially. Each region for joint 9 is located at an inter-bolt position and is so designed to receive a low bolt-clamping pressure. Joint 9 is welded or bonded over a given length. The base plates may be formed of springy SUS 301 or SUS 304 with a thickness lying in the range of 0.20 to 0.30 mm.

As the metallic gasket 10 is mounted between the cylinder head and cylinder block and clamped in place, the first plate 1-1 will first deform due largely to its relatively decreased spring constant, but the second plate 1-2 is less likely to deform. Since both the plates are fixed to each other at the joint position 8 they are placed in a well-balanced condition.

To put it another way, the bead on the first plate tends to deform first due to its decreased spring constant, but it is kept well-balanced with respect to the pressure applied to the engine by the combined spring force of the first with the second bead, since it is fixed at both sides between the cylinders and at both sides in the regions 9 to the second plate with its increased spring constant. Thus, the extent of deformation of any of the beads is limited, enabling durability to be imparted to the metallic gasket as a whole.

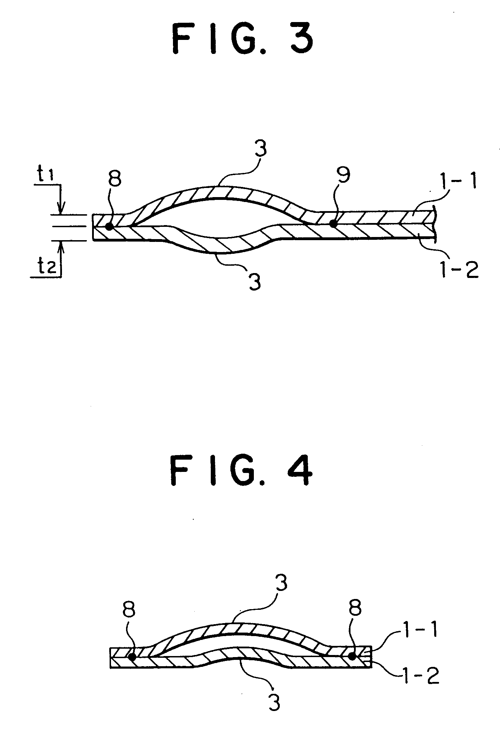

Fig. 3 shows the construction of another embodiment of our gasket.

According to this embodiment, the first and second plates 1-1 and 1-2 are designed to meet the following relation:$\text{t₁ ≦ t₂}$ wherein t₁ is the thickness of the first plate and t₂ is the thickness of the second plate, whereby their spring constants are caused to differ further. This embodiment is otherwise similar to that of Figs. 1 and 2.

Fig. 4 shows the construction of a further embodiment of our metallic gasket in accordance with this invention. The sectional view is similar to that shown in Fig. 1(a) with the exception that beads on the first and second plates are arched in the same direction.

Even with this embodiment, the resulting effects are similar to those achieved with the foregoing embodiments.

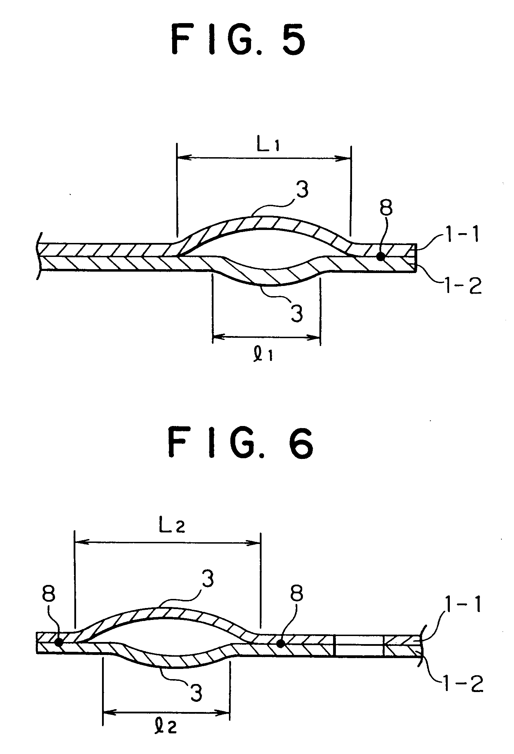

Fig. 5 is a sectional view taken along the line B-B' of Fig. 2 for an alternative embodiment. Similarly, Fig. 6 is a sectional view as taken along the line C-C' of Fig. 2. The B-B' section receives low pressure because of being located between clamping bolts and in this embodiment does not have a joint at 9. The C-C' section receives high pressure because of being located at clamping bolt positions and is provided with an auxiliary joint as shown between the beads and the clamping bolt hole. The section to receive high pressure can be preset at a spring constant lower than that of the section to receive low pressure (by making L₁ > L₂, and ℓ₁ > ℓ₂. It is understood that the height of the bead should not exceed 10% of the width of the bead.

While the foregoing embodiments have been described with reference to an engine arrangement having a narrow inter-bore space, this invention is not limited thereto and so may equally be applied to engine arrangements having a wide inter-bore space.

## Claims

1. A metallic gasket for location between the cylinder head and cylinder block of an internal combustion engine, the gasket comprising a base plate formed of resilient metal and provided with an array of beads adapted for sealing at least around the peripheral edge of an opening in the gasket corresponding to a combustion chamber of the cylinder block; and said base plate comprising two generally similar plates mounted back to back; the gasket being characterised in that the beads on one said plate differ in width from the corresponding beads on the other plate and the height of any said bead is 10% or less of the width of the said bead, and in that the plates are fixed together at flat segments thereof located radially closer to the centre of said opening than to a said bead extending circumferentially of said opening.

2. A metallic gasket according to Claim 1 further characterised in that the plates are fixed together at flat segments thereof located at positions closer to the edge of said opening than to the centre of the width of a bead extending circumferentially of said opening.

3. A metallic gasket according to Claim 1 or Claim 2, further characterised in that the width of each of the beads on one plate lies in the range of 75% or less of the width of each of the beads on the other plate.

4. A metallic gasket according to any preceding claim, further characterised in that said plates are fixed together not only at said flat segments but also at at least one region of the base plate subject to relatively low pressure in use of the gasket..

5. A metallic gasket according to any preceding claim, further characterised in that said plates have different thickness.

6. A metallic gasket according to any of Claims 1 to 3, further characterised in that said plates are fixed together only at peripheral edges of the said flat segments and in that the beads on portions of said plates subject to receive relatively lower pressure in use of the gasket have a different width from that of beads located on other portions of said plates, thereby tending to equalize pressures.

7. A metallic gasket according to any preceding claim, further characterised in that corresponding beads on the two plates are arched in the same direction.

8. A metallic gasket according to any of Claims 1 to 6, further characterised in that corresponding beads on the two plates are arched in opposite directions.

9. An internal combustion engine, comprising: a cylinder block defining at least one combustion chamber, a corresponding cylinder head, and a metallic gasket according to any preceding claim located in sealing relation between the cylinder block and cylinder head and providing a seal between the cylinder block and cylinder head at least around the peripheral edge of the opening of the gasket corresponding to the said combustion chamber.

## Patentansprüche

1. Metallische Dichtung zur Anordnung zwischen dem Zylinderkopf und Zylinderblock einer Brennkraftmaschine, wobei die Dichtung eine Grundplatte, gebildet aus elastischem Metall und versehen mit einer Reihe von Sicken, die zum Abdichten um den Umfangsrand einer Öffnung in der Dichtung entsprechend einer Brennkammer im Zylinderblock geeignet sind, umfaßt, und besagte Grundplatte zwei Rücken an Rücken angeordnete, allgemein ähnliche Platten umfaßt, wobei die Dichtung dadurch gekennzeichnet ist, daß die Sicken einer besagten Platte in der Breite von entsprechenden Sicken der anderen Platte differieren und die Höhe jeder besagten Sicke 10% oder weniger der Breite der besagten Sicke ist, und daß die Platten in den flachen Abschnitten hiervon, die sich radial näher zur Mitte besagter Öffnung als zu einer besagten Sicke, die sich um besagte Öffnung herum erstreckt, erstrecken, aneinander befestigt sind.

2. Metallische Dichtung nach Anspruch 1, weiter dadurch gekennzeichnet, daß die Platten in den flachen Abschnitten hiervon aneinander befestigt sind, die sich an Positionen näher zu der Kante besagter Öffnung als zur Mitte der Breite einer Sicke, die sich um besagte Öffnung herum erstreckt, befindet.

3. Metallische Dichtung nach Anspruch 1 oder Anspruch 2, weiter dadurch gekennzeichnet, daß die Breite jeder Sicke der einen Platte in dem Bereich von 75% oder weniger der Breite jeder der Sicken der anderen Platte liegt.

4. Metallische Dichtung nach einem vorhergehenden Anspruch, weiter dadurch gekennzeichnet, daß besagte Platten nicht nur an den flachen Abschnitten, sondern auch in wenigstens einem Bereich der Grundplatte aneinander befestigt sind, die einem relativ niedrigen Druck im Gebrauch der Dichtung ausgesetzt ist.

5. Metallische Dichtung nach einem vorhergehenden Anspruch, weiter dadurch gekennzeichnet, daß besagte Platten unterschiedliche Dikke besitzen.

6. Metallische Dichtung nach einem der Ansprüche 1 bis 3, weiter dadurch gekennzeichnet, daß besagte Platten nur in Randbereichen der besagten flachen Abschnitte aneinander befestigt sind, und daß die Sikken auf Abschnitten besagter Platten, die im Gebrauch der Dichtung einem relativ niedrigen Druck ausgesetzt werden, eine unterschiedliche Breite von derjenigen von Sicken besitzen, die auf anderen Abschnitten besagter Platten angeordnet sind, um hierdurch eine Neigung zum Ausgleichen von Drücken zu erreichen.

7. Metallische Dichtung nach einem vorhergehenden Anspruch, weiter dadurch gekennzeichnet, daß korrespondierende Sicken auf den beiden Platten in der gleichen Richtung gekrümmt sind.

8. Metallische Dichtung nach einem der Ansprüche 1 bis 6, weiter dadurch gekennzeichnet, daß korrespondierende Sicken auf den beiden Platten in entgegengesetzter Richtung gekrümmt sind.

9. Brennkraftmaschine, umfassend einen Zylinderblock, der wenigstens eine Brennkammer definiert, einen entsprechenden Zylinderkopf und eine metallische Dichtung gemäß einem vorhergehenden Anspruch, die abdichtend zwischen dem Zylinderblock und dem Zylinderkopf angeordnet ist und eine Abdichtung zwischen dem Zylinderblock und dem Zylinderkopf wenigstens um den Umfangsrand der Öffnung der Dichtung entsprechend der besagten Brennkammer liefert.

## Revendications

1. Joint de culasse métallique placé entre la tête de cylindre et le bloc-cylindre d'un moteur à explosion, le joint comprenant une plaque d'assise en métal résilient pourvue d'une rangée de cordons de soudure adaptés pour sceller la périphérie de l'ouverture du joint correspondant à la chambre de combustion d'un bloc-cylindre, ladite plaque d'assise comprenant de façon générale deux plaques similaires montées dos à dos; le joint étant caractérisé en ce que les cordons de soudure de l'une desdites plaques différent en largeur des cordons de soudure correspondants de l'autre plaque et en ce que la hauteur de n'importe lequel de ces cordons de soudure est inférieure d'au moins 10 % à celle de n'importe lequel des cordons correspondants, et en ce que les plaques sont fixées ensemble par leurs segments plats situés transversalement plus près du centre de ladite ouverture que dudit cordon de soudure, lequel se place à la circonférence de cette ouverture.

2. Joint de culasse métallique selon la revendication 1 plus amplement caractérisé en ce que les plaques sont fixées ensemble par leurs segments plats situés en position plus rapprochée du bord de ladite ouverture que de la partie médiane du cordon de soudure placé à la circonférence de ladite ouverture.

3. Joint de culasse métallique selon la revendication 1 ou la revendication 2 plus amplement caractérisé en ce que la largeur de chaque cordon de soudure sur une plaque chevauche dans des proportions de 75% au moins celle de chacun des cordons de l'autre plaque.

4. Joint de culasse métallique selon n'importe laquelle des revendications précédentes, plus amplement caractérisé en ce que lesdites plaques sont fixées ensemble non seulement par leurs segments plats mais aussi au moins par une partie de la plaque d'assise sujette à une pression relativement basse lors de l'usage du joint.

5. Joint de culasse métallique selon n'importe laquelle des revendications précédentes, plus amplement caractérisé en ce que lesdites plaques sont d'épaisseur différente.

6. Joint de culasse métallique selon n'importe laquelle des revendication 1 à 3, plus amplement caractérisé en ce que lesdites plaques sont fixées ensemble à la périphérie seulement desdits segments plats et en ce que les cordons de soudure sur les portions desdites plaques sujettes à recevoir une pression relativement basse pendant l'usage du joint sont de largeur différente par rapport à ceux situés sur d'autres portions de plaque, de façon à essayer d'équilibrer les pressions.

7. Joint de culasse métallique selon n'importe laquelle des revendications précédentes, plus amplement caractérisé en ce que les cordons de soudure sur les deux plaques sont cintrés dans la même direction.

8. Joint de culasse métallique selon n'importe laquelle des revendications 1 à 6, plus amplement caractérisé en ce que les cordons de soudure sur les deux plaques sont cintrés dans des directions opposées.

9. Moteur à explosion, comprenant : un bloc-cylindre définissant au moins une chambre à explosion, une tête de cylindre correspondante, et un joint de culasse métallique selon n'importe laquelle des revendications précédentes situé de manière à permettre l'adhésion du bloc-cylindre à la tête de cylindre au moins à la périphérie de l'ouverture du joint correspondant à ladite chambre à explosion.
